# EUROPEAN PATENT APPLICATION

(11) **EP 3 599 528 A2**
(43) Date of publication of application: **29.01.2020**
(21) Application number: 19181403.7
(22) Date of filing: 19.06.2019
(51) Int. Cl.: G05B 23/02

(54) **SYSTEM AND METHOD FOR DETECTING A SHIFT IN REAL DATA TREND USING A CONFIGURABLE ADAPTIVE THRESHOLD**

(30) Priority: 28.06.2018 US 201816022059
(71) Applicant: Honeywell International Inc. Intellectual Property - Patent Services, Morris Plains, NJ 07950 (US)
(72) Inventor: KIM, Kyusung, Morris Plains, NJ 07950 (US); HICKENBOTTOM, Christopher, Morris Plains, NJ 07950 (US); ULUYOL, Onder, Morris Plains, NJ 07950 (US); ERTL, Lukas, Morris Plains, NJ 07950 (US); RUDOLECKY, Tomas, Morris Plains, NJ 07950 (US); HRNCIR, Zdenek, Morris Plains, NJ 07950 (US)
(74) Representative: Lucas, Peter Lawrence

(57) **Abstract**

A computer-implemented system for detecting shifts in data is provided. The system is configured to: calculate, based on the value of a plurality of user-selectable baseline configuration parameters, baseline values for a series of data items in a data structure, wherein the baseline values include an average value and a standard deviation value; calculate, based on the value of a plurality of user-selectable weighted threshold parameters, a weighted threshold level for the series of data items; detect, based on the value of a plurality of user-selectable shift detection parameters, a shift in the series of data items, wherein the shift comprises an abrupt shift, a rapid drift, or a gradual drift; convert, based on the value of a plurality of user-selectable normalization parameters, the value of each data item in the series of data items to a normalized value; and determine whether the normalized values indicate a data shift.

## Description

### TECHNICAL FIELD

The present invention generally relates to data analysis, and more particularly relates to systems and methods for detecting a real data trend in a data series.

### BACKGROUND

Diagnostically important signals from a batch of machines can be collected. The collected signals may contain meaningful information that is useful for early fault detection or impending fault warning. It may be difficult to separate meaningful information buried in the signals from meaningless signal variance.

Hence, it is desirable to provide systems and methods for detecting a meaningful shift in a real data trend. Furthermore, other desirable features and characteristics of the present invention will become apparent from the subsequent detailed description and the appended claims, taken in conjunction with the accompanying drawings and the foregoing technical field and background.

### SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A computer-implemented system for detecting shifts in data indicating a fault condition is provided. The system includes a baseline calculation module configured to calculate baseline values for a series of data items in a data structure, wherein the baseline values include an average value and a standard deviation value for the series of data items, and wherein the baseline calculation module is configured to calculate the average value and the standard deviation value based on the value of a plurality of user-selectable baseline configuration parameters; a weighted threshold calculation module configured to calculate one or more weighted threshold levels for the series of data items based on the value of a plurality of user-selectable weighted threshold parameters; a shift detection module configured to detect whether a shift in the series of data items exists, wherein the shift includes an abrupt shift, a rapid drift, or a gradual drift, and wherein the shift detection module is configured by the value of a plurality of user-selectable shift detection parameters to detect the shift; and a normalization module configured to convert the value of each data item in the series of data items to a normalized value, wherein the normalization module is configured by the value of a plurality of user-selectable normalization parameters to convert each data item to its normalized value, and wherein the normalization module configured to determine whether the normalized values indicate a data shift.

A method for detecting shifts in data is provided. The method includes: calculating baseline values for a series of data items in a data structure, wherein the baseline values include an average value and a standard deviation value for the series of data items, and wherein the calculating baseline values is performed based on the value of a plurality of user-selectable baseline configuration parameters; calculating a weighted threshold level for the series of data items, wherein the calculating the weighted threshold level is performed based on the value of a plurality of user-selectable weighted threshold parameters; detecting whether a shift in the series of data items exists, wherein the shift includes an abrupt shift, a rapid drift, or a gradual drift, and wherein the detecting is performed based on the value of a plurality of user-selectable shift detection parameters; converting the value of each data item in the series of data items to a normalized value, wherein the converting is performed based on the value of a plurality of user-selectable normalization parameters; and determining whether the normalized values indicate a data shift.

A computer-implemented system for detecting shifts in data is provided. The system includes one or more processors configured by programming instructions on non-transient computer readable media. The system is configured to: calculate, based on the value of a plurality of user-selectable baseline configuration parameters, baseline values for a series of data items in a data structure, wherein the baseline values include an average value and a standard deviation value for the series of data items; calculate, based on the value of a plurality of user-selectable weighted threshold parameters, a weighted threshold level for the series of data items; detect, based on the value of a plurality of user-selectable shift detection parameters, a shift in the series of data items, wherein the shift includes an abrupt shift, a rapid drift, or a gradual drift; convert, based on the value of a plurality of user-selectable normalization parameters, the value of each data item in the series of data items to a normalized value; and determine whether the normalized values indicate a data shift.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram depicting an example shift detection system that is configured to detect changes in input data items that may indicate that a fault condition has occurred, in accordance with some embodiments;
FIGS. 2A, 2B, and 2C are diagrams depicting a plot of an example series of data items, in accordance with some embodiments;
FIG. 3 is a process flow chart depicting an example process in a shift detection system for identifying faults indicated by a data shift, in accordance with some embodiments;
FIG. 4 is a process flow chart depicting an example process in a shift detection system for calculating weighted thresholds, in accordance with some embodiments;
FIG. 5 is a process flow chart depicting an example process in a shift detection system for detecting a shift, in accordance with some embodiments;
FIGS. 6A and 6B are diagrams depicting a plot of a historical trend of data items and illustrating an example use of a weighted threshold for the detection of a shift in the historical trend of data items, in accordance with some embodiments;
FIG. 6C is a diagram depicting an example relationship between an example weighted sigma value and a traditional sigma value, in accordance with some embodiments;
FIG. 7A is a diagram depicting an example plot 702 of an example normalized output data series 704 after normalization of a series of data items, in accordance with some embodiments; and
FIG. 7B is a process flow chart depicting an example normalization process for generating example normalized output data, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

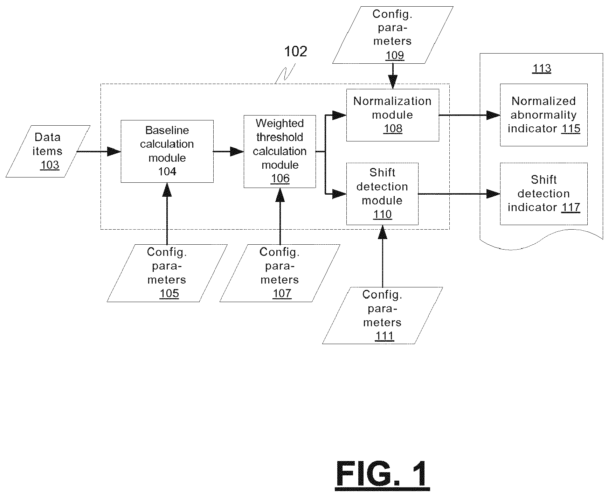

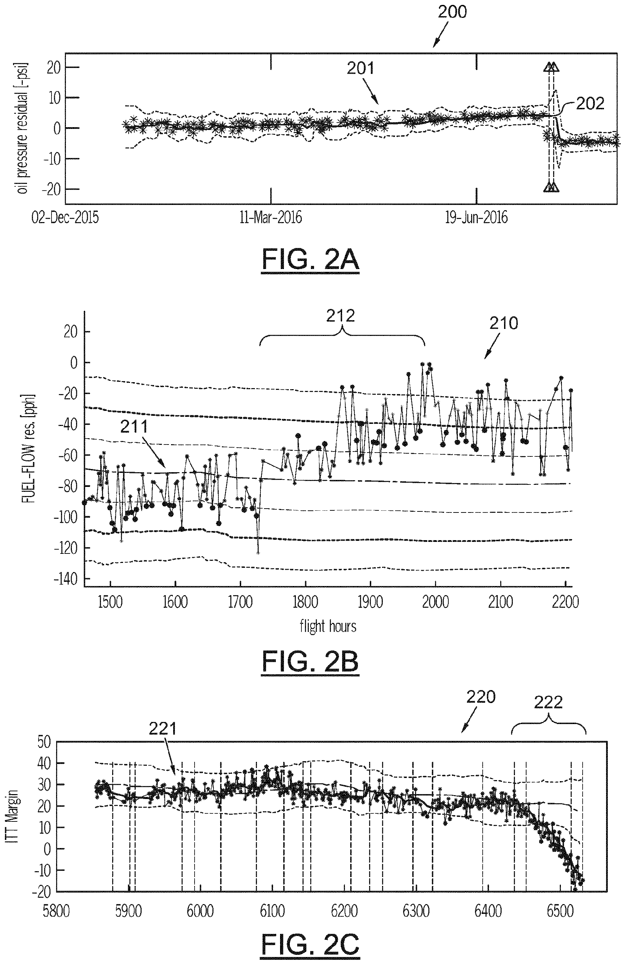

FIG. 1 is a block diagram depicting an example shift detection system 102 that is configured to detect changes in input data items 103 that may indicate that a fault condition has occurred. The example shift detection system 102 is configured to detect a type of shift in the series of data items 103, wherein the type of shift may include an abrupt shift, a rapid drift, and a gradual drift as illustrated, respectively, in FIGS. 2A, 2B, and 2C. FIG. 2A is a diagram depicting a plot 200 of an example series of data items 201. The example plot 200 illustrates an abrupt shift 202 in the data items 201. FIG. 2B is a diagram depicting a plot 210 of another example series of data items211. The example plot 210 illustrates a gradual drift 212 in the data items 211. FIG. 2C is a diagram depicting a plot 220 of another example series of data items 221. The example plot 220 illustrates a rapid drift 222 in the data items 221.

The example shift detection system 102 includes a baseline calculation module 104, a weighted threshold calculation module 106, a normalization module 108, and a shift detection module 110. The shift detecting methods employed by the example shift detection system 102 are configurable. The example shift detection system 102 is configured to accept user-selectable parameters and, based on the values of the user-selectable parameters, configured the employed shift detection methods. The example shift detection system 102 is configured to simultaneously employ multiple shift detection methods.

The example shift detection system 102 may be implemented by a controller. The controller includes at least one processor and a computer-readable storage device or media encoded with programming instructions for configuring the controller. The processor may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

The example baseline calculation module 104 is configured to calculate a baseline for a series of data items 103 in a data structure. The baseline includes an average value and a standard deviation value for the series of data items. The average value calculated by the example baseline calculation module 104 may be a median value or a mean value. The value of a user-selectable baseline configuration parameter 105 (*e.g.,* an average calculation method parameter) may be used by the example baseline calculation module 104 to determine the type of value (*e.g.,* median value or mean value) that is used for the calculation of the average value. The example baseline calculation module 104 may be configured to default to a specific type of value if one is not specified by a user-selectable parameter 105.

Additional user-selectable baseline configuration parameters 105 may be used to determine how the example baseline calculation module 104 calculates the average value and the standard deviation value. In addition to the average calculation method parameter, user-selectable baseline configuration parameters 105 may include: a domain parameter, which indicates whether the baseline values (*e.g.,* average and sigma) are calculated based on a certain number of points or over a time period; a maximum baseline size parameter, which indicates a maximum number of points used for the calculation of baseline parameters (*e.g.,* 100); a buffer size parameter, which indicates the number (*e.g.,* 20) of the most recent points that are included in a buffer and not included in baseline calculation; an outlier usage parameter (*e.g.,* with a value of enabled or disabled), which indicates whether outliers should be included or excluded from baseline calculations; and an outlier sigma parameter, which indicates a sigma level (*e.g.,* 6) beyond which outliers shall be filtered out when calculating baseline values.

The weighted threshold calculation module 106 is configured to calculate one or more weighted threshold levels for the series of data items 103 based on user-selectable weighted threshold parameters 107. The weighted threshold calculation module 106 is configured to calculate weighted thresholds that are based on a weighting factor that determines the influence of fixed thresholds and adaptive thresholds on the weighted thresholds. As an example, a weighting factor of 1 may indicate that the weighted threshold is equal to the fixed threshold, a weighting factor of 0 may indicate that the weighted threshold is equal to the adaptive threshold, and a weighting factor of .5 may indicate that the weighted threshold is half influenced by the fixed threshold and half influenced by the adaptive threshold.

The example weighted threshold calculation module 106 is configured to use a number of user-selectable weighted threshold configuration parameters 107 to determine how the example weighted threshold calculation module 106 calculates weighted thresholds. The user-selectable weighted threshold parameters 107 may include: a threshold type parameter, which indicates the type of weighted threshold (*e.g.,* absolute or delta); a lower absolute threshold parameter, which indicates the value of the lower absolute threshold; a higher absolute threshold parameter, which indicates the value of the higher absolute threshold; delta threshold from mean parameter, which indicates the value of delta threshold from mean; transition shape parameter, which indicates the shape (*e.g.,* step or ramp) of the transition from fixed threshold to weighted threshold; data before transition parameter, which indicates the amount of data before starting transition from fixed to weighted threshold; transition length parameter, which indicates the amount of data for the transition from fixed to weighted threshold; and a weighting factor parameter, which indicates the weight of fixed threshold (*e.g.,* 0-0.99) in final weighted threshold.

The example normalization module 108 is configured to convert the value of each data item in the series of data items 103 to a normalized value. The example normalization module 108 is configured to use a number of user-selectable normalization configuration parameters 109 to determine how the example normalization module 108 calculates normalized values. The user-selectable normalization configuration parameters 109 may include: a normalization select parameter, which indicates whether the normalization function is chosen for operation (*e.g.,* on/off); a normalization floor parameter, which indicates the sigma level for base (*e.g.,* 1 sigma); a normalization normal ceiling parameter, which indicates, a sigma level for a normal upper boundary (*e.g.,* 2 sigma); a normalization abnormal cap parameter, which indicates the sigma level for an abnormal boundary (e.g., 3 sigma); and a normalization ceiling for normal variation parameter, which indicates a value of a normal ceiling (*e.g.,* 1).

The example shift detection module 110 is configured to detect a type of shift in the series of data items, wherein the type of shift may include an abrupt shift, a rapid drift, and/or a gradual drift. The example shift detection module 110 is configured to use a number of user-selectable shift detection configuration parameters 111 to determine how the example shift detection module 110 detects data shifts. The user-selectable shift detection configuration parameters may include: a shift detection method selection parameter, which indicates the method for shift detection (*e.g.,* Western Electric rules or movement in smoothed value); and a shift detection direction selection parameter, which indicates the specific shift direction for which to detect (*e.g.,* up, down, or either direction).

When the Western Electric (WE) rules shift detection method is selected, the user-selectable shift detection configuration parameters 111 may further include: a WE rule selection parameter, which indicates the specific Western Electric (WE) rules to be applied; a WE window size parameter, which indicates the size of a window for WE rule evaluation; a WE number of exceptional points parameter, which indicates the number of points that shall exceed the limit in the WE rule to trigger the finding of a fault; a boundary sigma level parameter, which indicates a boundary sigma level that if exceeded triggers the finding of a fault; and a cumulative sigma level parameter, which indicates the sum of sigma levels that if exceeded during a window triggers the finding of a fault. When the smoothed value shift detection method is selected, the user-selectable shift detection configuration parameters 111 may further include: a smoothed window parameter, which indicates the number of points averaged when calculating the smoothed value.

The example shift detection system 102 is configured to output data 113 that indicates whether abnormal shifts were detected in the data items 103. The output data 113 may include normalized abnormality indicator data 115, which indicates whether an abnormality was detected from normalized data in the normalization module 108. The output data 113 may also include shift detection indicator data 117, which indicates whether a data shift was detected by the shift detection module 110.

In one example implementation of the example shift detection system 102, the input data items 103 may comprise mechanical systems condition indicator (CI) data for a vehicle such as a helicopter or aircraft. The CI data 103 may be analyzed using the example shift detection system 102 to determine the health of a number of mechanical components in the vehicle such as a gearbox, bearings, and other components. The CI data 103 may be input into the example shift detection system 102 and analyzed for data shifts. The output data 113 from the example shift detection system 102, in this example, may comprise vehicle health indicator data in the form of normalized abnormality indicator data 115 and/or shift detection indicator data 117.

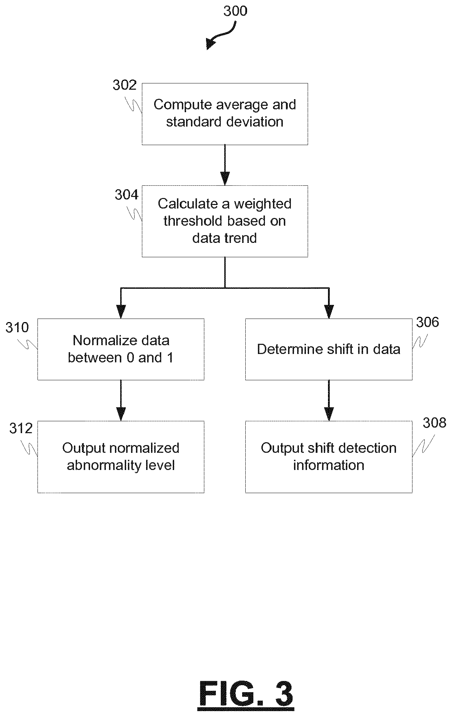

FIG. 3 is a process flow chart depicting an example process 300 in a shift detection system for identifying faults indicated by a data shift. The order of operation within the example process 300 is not limited to the sequential execution as illustrated in the figure, but may be performed in one or more varying orders as applicable and in accordance with the present disclosure.

The example process 300 includes computing average and standard deviation (e.g., sigma) values for a data item series (operation 302). A number of options are available for computing the average and standard deviation values. The options chosen for computation may be determined from user-selectable baseline configuration parameters. The user-selectable baseline configuration parameters may include: an average calculation method parameter, which indicates a method (*e.g.,* median value or mean value) for calculating an average value; a domain parameter, which indicates whether the baseline values (*e.g.,* average and sigma) are calculated based on a certain number of points or over a time period; a maximum baseline size parameter, which indicates a maximum number of points used for the calculation of baseline parameters (*e.g.,* 100); a buffer size parameter, which indicates the number (*e.g.,* 20) of the most recent points that are included in a buffer and not included in the baseline calculation; an outlier usage parameter (*e.g.,* with a value of enabled or disabled), which indicates whether outliers should be included or excluded from baseline calculations; and an outlier sigma parameter, which indicates a sigma level *(e.g.,* 6) beyond which outliers shall be filtered out when calculating baseline values.

The example process 300 includes calculating a weighted threshold based on the computed average, standard deviation (*e.g.,* sigma), and data trend (operation 304). The weighted threshold may be calculated based on a weighting factor that determines the influence of fixed thresholds and adaptive thresholds on the weighted thresholds. As an example, a weighting factor of 1 may indicate that the weighted threshold is equal to the fixed threshold, a weighting factor of 0 may indicate that the weighted threshold is equal to the adaptive threshold, and a weighting factor of .5 may indicate that the weighted threshold is half influenced by the fixed threshold and half influenced by the adaptive threshold.

A number of options are available for computing the weighted threshold. The options chosen for computation may be determined from user-selectable weighted threshold parameters. The user-selectable weighted threshold parameters may include: a threshold type parameter, which indicates the type of weighted threshold (*e.g.,* absolute or delta); a lower absolute threshold parameter, which indicates the value of the lower absolute threshold; a higher absolute threshold parameter, which indicates the value of the higher absolute threshold; delta threshold from mean parameter, which indicates the value of delta threshold from mean; transition shape parameter, which indicates the shape (*e.g.,* step or ramp) of the transition from fixed threshold to weighted threshold; data before transition parameter, which indicates the amount of data before starting transition from fixed to weighted threshold; transition length parameter, which indicates the amount of data for the transition from fixed to weighted threshold; and a weighting factor parameter, which indicates the weight of fixed threshold (*e.g.,* 0-0.99) in final weighted threshold.

The example process 300 includes determining, based on the weighted threshold, whether a shift in a data series has occurred (operation 306). A number of options are available for determining if a shift in a data series has occurred. The options may be determined from user-selectable shift detection configuration parameters. The user-selectable shift detection configuration parameters may include: a shift detection method selection parameter, which indicates the method for shift detection (*e.g.,* Western Electric rules or movement in smoothed value); and a shift detection direction selection parameter, which indicates the specific shift direction for which to detect (*e.g*., up, down, or either direction).

When the Western Electric (WE) rules shift detection method is selected, the user-selectable shift detection configuration parameters may further include: a WE rule selection parameter, which indicates the specific Western Electric (WE) rules to be applied; a WE window size parameter, which indicates the size of window for WE rule evaluation; a WE number of exceptional points parameter, which indicates the number of points that shall exceed the limit in WE rule to trigger the finding of a fault; a boundary sigma level parameter, which indicates a boundary sigma level that if exceeded triggers the finding of a fault; and a cumulative sigma level parameter, which indicates the sum of sigma levels that if exceeded during a window triggers the finding of a fault. When the smoothed value shift detection method is selected, the user-selectable shift detection configuration parameters may further include: a smoothed window parameter, which indicates the number of points averaged when calculating the smoothed value.

The example process 300 includes outputting shift detection information (operation 308). The shift detection information indicates whether a data shift was detected. The types of data shifts that may be detected include an abrupt shift, a rapid drift, and a gradual drift.

The example process 300 includes normalizing data between 0 and 1 (operation 310). The value of each data item in an input series of data items can be converted to a normalized value. A number of options are available for normalizing the data series. The options may be determined from user-selectable normalization configuration parameters. The user-selectable normalization configuration parameters may include: a normalization select parameter, which indicates whether the normalization function is chosen for operation (*e.g.,* on/off); a normalization floor parameter, which indicates the sigma level for base (*e.g.,* 1 sigma); a normalization normal ceiling parameter, which indicates, sigma level for normal upper boundary (*e.g.,* 2 sigma); a normalization abnormal cap parameter, which indicates the sigma level for abnormal boundary (*e.g.,* 3 sigma); and a normalization ceiling for normal variation parameter, which indicates a value of normal ceiling (*e.g.,* 1).

The example process 300 includes outputting normalized abnormality level information (operation 312). The normalized abnormality level information indicates whether an abnormality was detected from the normalized data.

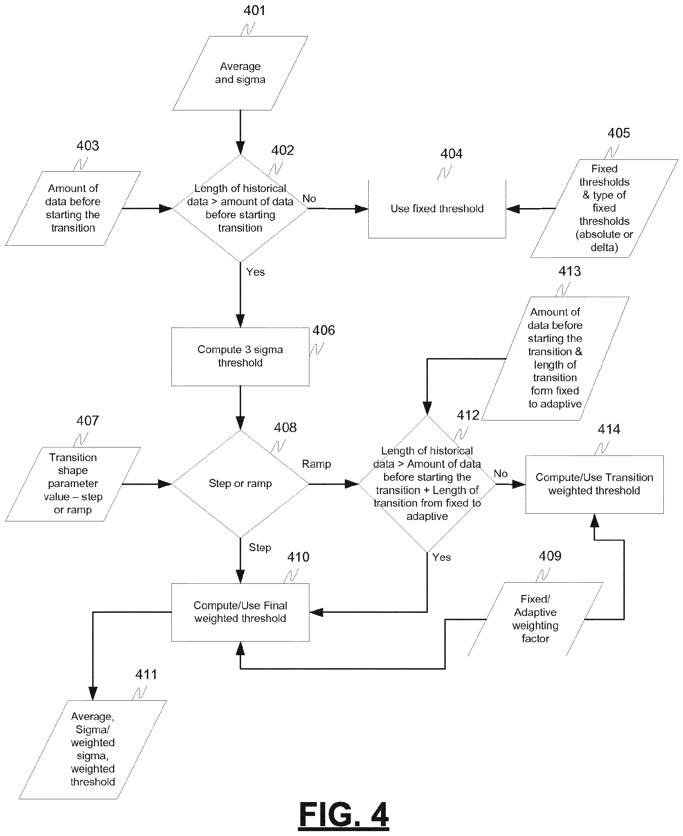

FIG. 4 is a process flow chart depicting an example process 400 in a shift detection system for calculating weighted thresholds. The order of operation within the example process 400 is not limited to the sequential execution as illustrated in the figure, but may be performed in one or more varying orders as applicable and in accordance with the present disclosure.

The example process 400 includes determining if the length of historical data is greater than the amount of data before starting a transition from a fixed threshold to a weighted threshold (decision 402). A calculated baseline 401 (*e.g.,* average and sigma) for an input data series is used in the example process 400. Information 403 regarding the amount of data before starting the transition may be user-provided for the decision process *(e.g.,* via configuration parameters).

When it is determined that the length of historical data is not greater than the amount of data before starting transition (no at decision 402), then a fixed threshold is used (operation 404). Information 405 regarding fixed thresholds and type of fixed thresholds (*e.g.,* absolute or delta) may be user-provided for the decision process (*e.g.,* via configuration parameters). When it is determined that the length of historical data is greater than the amount of data before starting transition (yes at decision 402), then a 3-sigma threshold is computed (operation 406).

The example process 400 includes determining if a step or ramp is to be used for a transition from fixed to weighted thresholds (decision 408). A transition shape parameter value 407 (*e.g.,* step or ramp) may be used in the determination.

When it is determined that the step transition is to be used, the example process includes computing/using the final weighted threshold (operation 410). A configurable fixed/adaptive weighting factor 409 is provided to compute the final weighted threshold. The average, sigma/weighted sigma, weighted threshold 411 may be output from the example process 400.

When it is determined that the ramp transition is to be used, the example process includes determining if the length of historical data is greater than the amount of data before starting the transition plus the length of transition from fixed to adaptive (decision 412).

When it is determined that the length of historical data is greater than the amount of data before starting the transition plus the length of transition from fixed to adaptive (yes at decision 412), then the example process includes computing/using the final weighted threshold (operation 410). The configurable fixed/adaptive weighting factor 409 is provided to compute the final weighted threshold. The average, sigma/weighted sigma, weighted threshold 411 may be output from the example process 400.

When it is determined that the length of historical data is not greater than the amount of data before starting the transition plus length of transition from fixed to adaptive (no at decision 412), then the example process 400 includes computing/using a transition weighted threshold (operation 414). The to compute fixed/adaptive weighting factor 409 is used to compute a transition threshold.

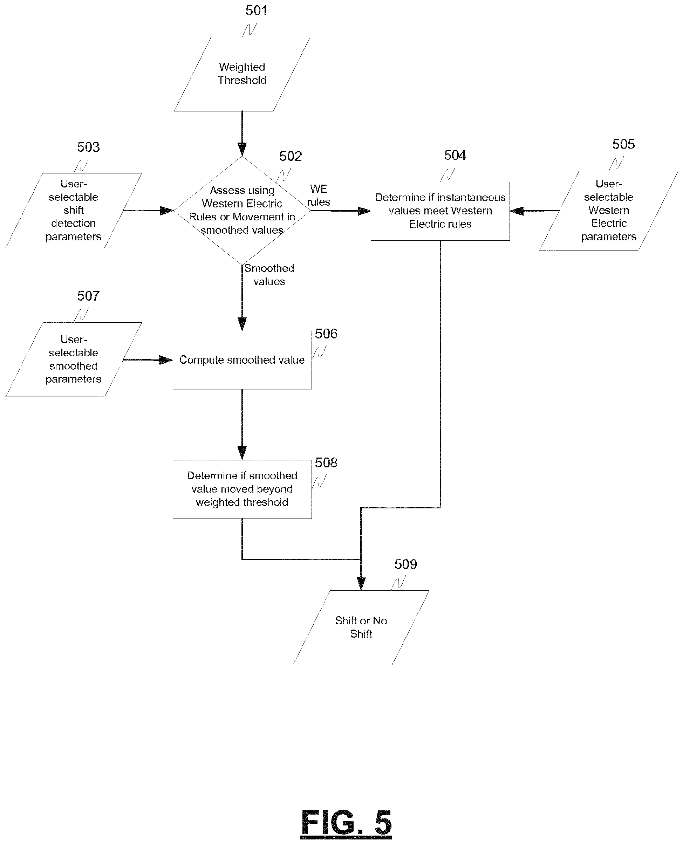

FIG. 5 is a process flow chart depicting an example process 500 in a shift detection system for detecting a shift. The order of operation within the example process 500 is not limited to the sequential execution as illustrated in the figure, but may be performed in one or more varying orders as applicable and in accordance with the present disclosure.

The example process 500 includes determining whether to assess an input data series using Western Electric Rules or movement in smoothed values (decision 502). One or more weighted thresholds (501) are utilized in the example process 500. User-selectable shift detection parameters (503), as discussed with reference to FIG. 3, may be evaluated in the determining decision.

If it is determined that the input data series will be assessed using Western electric rules at decision 502, then the example process 500 includes determining if instantaneous data series values meet Western Electric rules (operation 504). User-selectable Western Electric parameters (505), as discussed with reference to FIG. 3, may be evaluated to determine if instantaneous data series values meet Western Electric rules. Based on the determination, a shift or no shift indication (509) may be provided.

If it is determined that to assess the input data series using smoothed values at decision 502, then the example process 500 includes computing a smoothed value from the input data series (operation 506). User-selectable smoothed parameters (507), as discussed with reference to FIG. 3, may be evaluated to determine how to compute a smoothed value from the input data series.

The example process 500 includes determining if the smoothed value moved beyond weighted thresholds (operation 508). Based on the determination, a shift or no shift indication (509) may be provided.

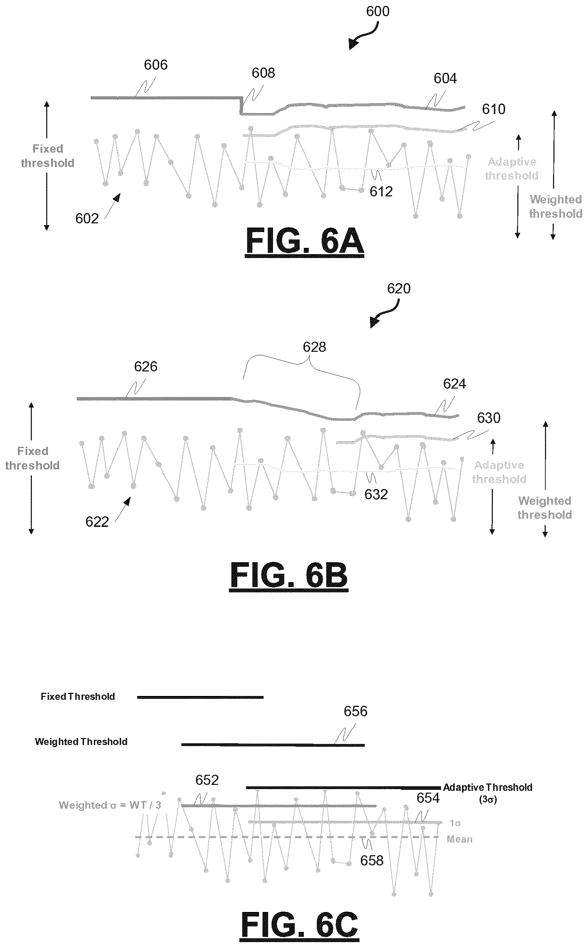

FIGS. 6A and 6B are diagrams depicting a plot 600/620 of a historical trend of data items 602/622 and illustrating an example use of a weighted threshold 604/624 for the detection of a shift in the historical trend of data items 602/622. FIGS. 6A and 6B illustrate that a threshold for use in shift detection can be divided into three phases: a fixed threshold phase 606/626, a transition phase 608/628, and a weighted threshold phase 604/624. When fewer data items are available, the data items may be assessed using a fixed threshold 606/626. When sufficient data items are available, the data items may be assessed using a weighted threshold 604/624. A transition period may be used when switching from the use of a fixed threshold to a weighted threshold.

After average 612/632 and sigma baseline values have been calculated, they can be combined to generate an adaptive threshold 610/630. The adaptive threshold 610/630 can be combined with the fixed threshold 606/626 using a weighting factor to generate a weighted threshold 604/624. The weighted threshold 604/624 can then be used as the primary value to compare against when detecting a shift. The weighting factor (WF) defines the relative influence of the fixed threshold 606/626 compared to that of the calculated adaptive threshold 610/630. If the WF equals the value 1, then the fixed threshold 606/626 is used. If the WF equals the value 0, then the threshold is driven entirely by the adaptive threshold 610/630. The weighted threshold 604/624 can be determined by the following formula: Weighted threshold = (WF x Fixed threshold value) + ((1- WF) x adaptive threshold value).

FIG. 6C is a diagram depicting an example relationship between an example weighted sigma value 652 and a traditional sigma value 654. A traditional sigma value 654 may be determined from a standard deviation calculation. A weighted sigma value 652 may be determined by a weighted threshold value 656 minus a mean value 658 with the result divided by three. The weighted sigma 652 may be more appropriate in some applications for shift detection than a traditional sigma value 654.

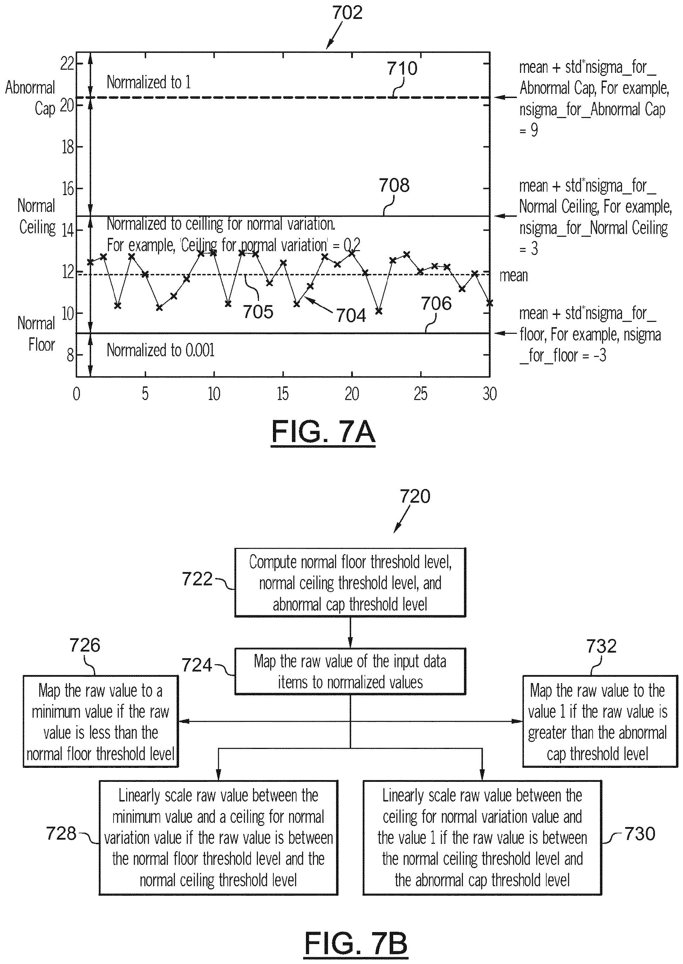

FIG. 7A is a diagram depicting an example plot 702 of an example normalized output data series 704 after normalization of a series of data items. The example normalized output data series 704 results from a type of piece-wise scaling based on an average value 705 and a sigma/weighted sigma value for the series of data items. FIG. 7B is a process flow chart depicting an example normalization process 720 for generating the example normalized output data 704. The inputs to the example process 720 include raw data values from the series of data items, an average value 705 for the series of data items, and a sigma or weighted sigma value for the series of data items.

The example process 720 includes computing three threshold levels: normal floor threshold level 706, normal ceiling threshold level 708, and abnormal cap threshold level 710 (operation 722). The example normal floor threshold level = mean + std*nsigma_for_floor; the example normal ceiling threshold level = mean + std*nsigma_for_Normal_Ceiling; and the example abnormal cap threshold level = mean + std*nsigma_for_Abnormal_Cap, wherein mean is the average value for the series of data items, std is the standard deviation (or sigma) for the series of data items, nsima _for _floor is a user-selectable parameter value that indicates the sigma level for base, nsigma_for_Normal_Ceiling is a user-selectable parameter value that indicates the sigma level for a normal upper boundary, and nsigma_for_Abnormal_Cap is a user-selectable parameter value that indicates the sigma level for an abnormal boundary.

The example process 720 includes mapping the raw value of the input data items to normalized values (operation 724). If the raw value is less than the normal floor threshold level, then the raw value is mapped to a minimum value (e.g., 0.001) (operation 726). If the raw value is between the normal floor threshold level and the normal ceiling threshold level, then the raw value is scaled linearly between the minimum value and a ceiling for normal variation value (*e.g.,* 0.2) (operation 728). If the raw value is between the normal ceiling threshold level and the abnormal cap threshold level, then the raw value is scaled linearly between the ceiling for normal variation value and the value 1 (operation 730). If the raw value is greater than the abnormal cap threshold level, then the raw value is mapped to the value 1 (operation 732).

Apparatus, systems, methods, and techniques are described for a configurable tool that can make data analysis and fault troubleshooting more consistent and efficient. Described apparatus, systems, methods, and techniques can provide a shift detection tool that is configurable to detect multiple types of data shifts using varying techniques.

In one embodiment, a computer-implemented system for detecting shifts in data indicating a fault condition is provided. The system comprises a baseline calculation module configured to calculate baseline values for a series of data items in a data structure, wherein the baseline values include an average value and a standard deviation value for the series of data items, and wherein the baseline calculation module is configured to calculate the average value and the standard deviation value based on the value of a plurality of user-selectable baseline configuration parameters; a weighted threshold calculation module configured to calculate one or more weighted threshold levels for the series of data items based on the value of a plurality of user-selectable weighted threshold parameters; a shift detection module configured to detect whether a shift in the series of data items exists, wherein the shift comprises an abrupt shift, a rapid drift, or a gradual drift, and wherein the shift detection module is configured by the value of a plurality of user-selectable shift detection parameters to detect the shift; and a normalization module configured to convert the value of each data item in the series of data items to a normalized value, wherein the normalization module is configured by the value of a plurality of user-selectable normalization parameters to convert each data item to its normalized value, and wherein the normalization module configured to determine whether the normalized values indicate a data shift.

In one example, the baseline configuration parameters include a plurality of: an average calculation method parameter, which indicates a method for calculating an average value; a domain parameter, which indicates whether the baseline values are calculated based on a certain number of points or over a time period; a maximum baseline size parameter, which indicates a maximum number of points used for the calculation of baseline parameters; a buffer size parameter, which indicates a number of the most recent points that are included in a buffer and not included in baseline calculations; an outlier usage parameter, which indicates whether outliers should be included or excluded from baseline calculations; and an outlier sigma parameter, which indicates a sigma level beyond which outliers are filtered out when calculating baseline values.

In one example, the user-selectable weighted threshold parameters include a plurality of: a threshold type parameter, which indicates a type of weighted threshold; a lower absolute threshold parameter, which indicates the value of a lower absolute threshold; a higher absolute threshold parameter, which indicates the value of a higher absolute threshold; a delta threshold from mean parameter, which indicates the value of a delta threshold from mean; a transition shape parameter, which indicates the shape of a transition from a fixed threshold to a weighted threshold; a data before transition parameter, which indicates an amount of data before starting a transition from a fixed to a weighted threshold; a transition length parameter, which indicates an amount of data for a transition from a fixed to a weighted threshold; and a weighting factor parameter, which indicates a weight of a fixed threshold in the weighted threshold.

In one example, the user-selectable shift detection parameters include: a shift detection method selection parameter, which indicates a method for shift detection; and a shift detection direction selection parameter, which indicates a specific shift direction for which to detect.

In one example, the user-selectable shift detection parameters further include a plurality of: a Western Electric (WE) rule selection parameter, which indicates the specific WE rules to be applied; a WE window size parameter, which indicates the size of window for WE rule evaluation; a WE number of exceptional points parameter, which indicates the number of points that has to exceed limits in WE rules to trigger the finding of a fault; a boundary sigma level parameter, which indicates a boundary sigma level that if exceeded triggers the finding of a fault; and a cumulative sigma level parameter, which indicates the sum of sigma levels that if exceeded during a window triggers the finding of a fault.

In one example, the user-selectable shift detection parameters further include a smoothed window parameter, which indicates the number of points averaged when calculating the smoothed value.

In one example, the user-selectable normalization parameters include a plurality of: a normalization select parameter, which indicates whether the normalization function is chosen for operation; a normalization floor parameter, which indicates the sigma level for a base; a normalization normal ceiling parameter, which indicates, sigma level for a normal upper boundary; a normalization abnormal cap parameter, which indicates the sigma level for an abnormal boundary; and a normalization ceiling for normal variation parameter, which indicates a value of a normal ceiling.

In one example, the baseline calculation module is configured to calculate the baseline values by using a moving window of data items wherein the size of the moving window is determined by user-selectable parameter values.

In one example, the baseline calculation module is configured to calculate the baseline values by using a buffer to exclude the most recent data items from the calculation wherein the size of the buffer is determined by user-selectable parameter values.

In one example, the weighted threshold calculation module is configured to calculate weighted threshold levels by applying a first weighting factor to a fixed threshold and a second weighting factor to an adaptive threshold, wherein the fixed threshold is determined by user-selectable parameter values and wherein the adaptive threshold is calculated based on the calculated average and standard deviation of the data series.

In one example, the weighted threshold calculation module is configured to transition from a fixed threshold to the weighted threshold using a ramp transition when user-selectable parameters indicate that the ramp transition be used and using a step transition when user-selectable parameters indicate that the step transition be used.

In one example, the shift detection module is configured to apply Western Electric rules to detect a shift when a user-selectable parameter value indicates application of the Western Electric rules.

In one example, the shift detection module is configured to apply a smoothing window to detect a shift when a user-selectable parameter value indicates application of the smoothing window.

In one example, to calculate the normalized value, the normalization module is configured to: compute a normal floor threshold level, a normal ceiling threshold level, and an abnormal cap threshold level; and map raw values of input data items to normalized values, wherein to map the raw values to normalized values, the normalization module is further configured to: map the raw value to a minimum value near zero when the raw value is less than the normal floor threshold level; linearly scale the raw value between the minimum value and a ceiling for normal variation value when the raw value is between the normal floor threshold level and the normal ceiling threshold level; linearly scale the raw value between the ceiling for normal variation value and the value 1 when the raw value is between the normal ceiling threshold level and the abnormal cap threshold level; and map the raw value to the value 1 when the raw value is greater than the abnormal cap threshold level.

In another embodiment, a method for detecting shifts in data is provided. The method comprises: calculating baseline values for a series of data items in a data structure, wherein the baseline values include an average value and a standard deviation value for the series of data items, and wherein the calculating baseline values is performed based on the value of a plurality of user-selectable baseline configuration parameters; calculating a weighted threshold level for the series of data items, wherein the calculating the weighted threshold level is performed based on the value of a plurality of user-selectable weighted threshold parameters; detecting whether a shift in the series of data items exists, wherein the shift comprises an abrupt shift, a rapid drift, or a gradual drift, and wherein the detecting is performed based on the value of a plurality of user-selectable shift detection parameters; converting the value of each data item in the series of data items to a normalized value, wherein the converting is performed based on the value of a plurality of user-selectable normalization parameters; and determining whether the normalized values indicate a data shift.

In another embodiment, a computer-implemented system for detecting shifts in data is provided. The system comprises one or more processors configured by programming instructions on non-transient computer readable media. The system is configured to: calculate, based on the value of a plurality of user-selectable baseline configuration parameters, baseline values for a series of data items in a data structure, wherein the baseline values include an average value and a standard deviation value for the series of data items; calculate, based on the value of a plurality of user-selectable weighted threshold parameters, a weighted threshold level for the series of data items; detect, based on the value of a plurality of user-selectable shift detection parameters, a shift in the series of data items, wherein the shift comprises an abrupt shift, a rapid drift, or a gradual drift; convert, based on the value of a plurality of user-selectable normalization parameters, the value of each data item in the series of data items to a normalized value; and determine whether the normalized values indicate a data shift.

In one example, the system is further configured to: calculate the baseline values by using a moving window of data items wherein the size of the moving window is determined by user-selectable parameter values; and calculate the baseline values by using a buffer to exclude the most recent data items from the calculation wherein the size of the buffer is determined by user-selectable parameter values.

In one example, the system is further configured to: calculate weighted threshold levels by apply a first weighting factor to a fixed threshold and a second weighting factor to an adaptive threshold, wherein the fixed threshold is determined by user-selectable parameter values and wherein the adaptive threshold is calculated based on the calculated average and standard deviation of the data series; transition from a fixed threshold to the weighted threshold using a ramp transition when user-selectable parameters indicate that the ramp transition be used; and transition from a fixed threshold to the weighted threshold using a step transition when user-selectable parameters indicate that the step transition be used.

In one example, the system is further configured to: apply Western Electric rules to detect a shift when a user-selectable parameter value indicates application of the Western Electric rules; and apply smoothing to detect a shift when a user-selectable parameter value indicates application of smoothing.

In one example, to calculate the normalized value, the system is further configured to: compute a normal floor threshold level, a normal ceiling threshold level, and an abnormal cap threshold level; and map raw values of input data items to normalized values, wherein to map the raw values to normalized values, the system is further configured to: map the raw value to a minimum value near zero when the raw value is less than the normal floor threshold level; linearly scale the raw value between the minimum value and a ceiling for normal variation value when the raw value is between the normal floor threshold level and the normal ceiling threshold level; linearly scale the raw value between the ceiling for normal variation value and the value 1 when the raw value is between the normal ceiling threshold level and the abnormal cap threshold level; and map the raw value to the value 1 when the raw value is greater than the abnormal cap threshold level.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g.,* a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A computer-implemented system for detecting shifts in data indicating a fault condition, the system comprising:
a baseline calculation module configured to calculate baseline values for a series of data items in a data structure, the baseline values including an average value and a standard deviation value for the series of data items, the baseline calculation module configured to calculate the average value and the standard deviation value based on the value of a plurality of user-selectable baseline configuration parameters;
a weighted threshold calculation module configured to calculate one or more weighted threshold levels for the series of data items based on the value of a plurality of user-selectable weighted threshold parameters;
a shift detection module configured to detect whether a shift in the series of data items exists, the shift comprising an abrupt shift, a rapid drift, or a gradual drift, the shift detection module configured by the value of a plurality of user-selectable shift detection parameters to detect the shift; and
a normalization module configured to convert the value of each data item in the series of data items to a normalized value, the normalization module configured by the value of a plurality of user-selectable normalization parameters to convert each data item to its normalized value, the normalization module configured to determine whether the normalized values indicate a data shift.

2. The system of claim 1, wherein the baseline calculation module is configured to calculate the baseline values by using a moving window of data items wherein the size of the moving window is determined by user-selectable parameter values.

3. The system of claim 1, wherein the baseline calculation module is configured to calculate the baseline values by using a buffer to exclude the most recent data items from the calculation wherein the size of the buffer is determined by user-selectable parameter values.

4. The system of claim 1, wherein the weighted threshold calculation module is configured to calculate weighted threshold levels by applying a first weighting factor to a fixed threshold and a second weighting factor to an adaptive threshold, wherein the fixed threshold is determined by user-selectable parameter values and wherein the adaptive threshold is calculated based on the calculated average and standard deviation of the data series.

5. The system of claim 1, wherein the weighted threshold calculation module is configured to transition from a fixed threshold to the weighted threshold using a ramp transition when user-selectable parameters indicate that the ramp transition be used.

6. The system of claim 1, wherein the weighted threshold calculation module is configured to transition from a fixed threshold to the weighted threshold using a step transition when user-selectable parameters indicate that the step transition be used.

7. The system of claim 1, wherein the shift detection module is configured to apply Western Electric rules to detect a shift when a user-selectable parameter value indicates application of the Western Electric rules.

8. The system of claim 1, wherein the shift detection module is configured to apply a smoothing window to detect a shift when a user-selectable parameter value indicates application of the smoothing window.

9. The system of claim 1, wherein to calculate the normalized value, the normalization module is configured to:
compute a normal floor threshold level, a normal ceiling threshold level, and an abnormal cap threshold level; and
map raw values of input data items to normalized values, wherein to map the raw values to normalized values, the normalization module is further configured to:
map the raw value to a minimum value near zero when the raw value is less than the normal floor threshold level;
linearly scale the raw value between the minimum value and a ceiling for normal variation value when the raw value is between the normal floor threshold level and the normal ceiling threshold level;
linearly scale the raw value between the ceiling for normal variation value and the value 1 when the raw value is between the normal ceiling threshold level and the abnormal cap threshold level; and
map the raw value to the value 1 when the raw value is greater than the abnormal cap threshold level.

10. A method for detecting shifts in data, the method comprising:
calculating baseline values for a series of data items in a data structure, the baseline values including an average value and a standard deviation value for the series of data items, the calculating baseline values performed based on the value of a plurality of user-selectable baseline configuration parameters;
calculating a weighted threshold level for the series of data items, the calculating the weighted threshold level performed based on the value of a plurality of user-selectable weighted threshold parameters;
detecting whether a shift in the series of data items exists, the shift comprising an abrupt shift, a rapid drift, or a gradual drift, the detecting performed based on the value of a plurality of user-selectable shift detection parameters;
converting the value of each data item in the series of data items to a normalized value, the converting performed based on the value of a plurality of user-selectable normalization parameters; and
determining whether the normalized values indicate a data shift.
